# EUROPÄISCHE PATENTSCHRIFT

(11) **EP 3 828 479 B1**
(45) Veröffentlichungstag und Bekanntmachung des Hinweises auf die Patenterteilung: **07.06.2023**
(21) Anmeldenummer: 19212258.8
(22) Anmeldetag: 28.11.2019
(51) Int. Cl.: F24S 25/16

(54) **HALTEELEMENT UND ANORDNUNG MIT MEHREREN HALTEELEMENTEN SOWIE SOLARANLAGE**
RETAINING ELEMENT AND ARRANGEMENT WITH SEVERAL HOLDING ELEMENTS AND SOLAR SYSTEM
ÉLÉMENT DE MAINTIEN ET AGENCEMENT DOTÉ D'UNE PLURALITÉ D'ÉLÉMENTS DE MAINTIEN AINSI QU'UNE INSTALLATION SOLAIRE

(43) Veröffentlichungstag der Anmeldung: 02.06.2021
(73) Patentinhaber: voestalpine Metal Forming GmbH, 3500 Krems an der Donau (AT)
(72) Erfinder: WIEMANN, Marcus, 49324 Melle (DE); GERSTNER, Florian, 73432 Aalen (DE)
(74) Vertreter: Jell, Friedrich

(56) Entgegenhaltungen:
- EP-A1- 0 004 060
- DE-A1-102010 014 414
- DE-U1-202012 103 392

## Beschreibung

Die Erfindung betrifft ein Halteelement sowie eine Anordnung mit mehreren Halteelementen für mindestens ein Solarelement, insbesondere Solarmodul und/oder Solarkollektor, mit einer, eine Aufstandsfläche für das Halteelement ausbildenden Basis, mit zwei, von der Basis unterschiedlich hoch vorspringenden Auflagen für das Solarelement und mit an Stirnseiten des Halteelements vorgesehenen Verbindungselementen, die mindestens eine Aussparung und wenigstens eine Lasche aufweisen, welche Lasche für ein Einbringen in solch eine Aussparung ausgeformt ist.

Damit Solaranlagen Windbelastungen standhalten, ist es aus der DE 202012 103392U1 bekannt, einzelne Halteelemente der Solaranlagen miteinander zu verbinden. Hierfür weist jedes Halteelement an einer Stirnseite Laschen und an einer anderen Stirnseite langlochförmige Aussparungen auf, wobei die Laschen an einer Stirnseite des Halteelements ausgebildet sind, in Ausnehmungen an einem daran anschließenden anderen Halteelement einzugreifen, was zu einem formschlüssigen Längsverbund der Halteelemente führt.

Die Halteelemente halten Solarelemente in einem vorgegebenen Neigungswinkel gegenüber einer Aufstandsfläche. Hierzu weisen die Halteelemente jeweils zwei, auf unterschiedliche Höhen von der Basis vorspringende Auflagen auf, auf welchen die Solarelemente aufliegen.

Trotz dieses Verbunds bedarf es weiterer Maßnahmen zur Verankerung der Halteelemente - beispielsweise, um die unerwünschte, weil unter anderem die Solarelemente gefährdende, Versetzung zu vermeiden, welche etwa durch ein seitliches Spiel zwischen Ausnehmung und Lasche, aber auch aufgrund thermischer Ausdehnung begünstigt werden kann.

Die Erfindung hat sich daher die Aufgabe gestellt, ein Halteelement des eingangs geschilderten Stands der Technik derart konstruktiv zu verändern, dass mit diesem Solarelemente sicher gehalten werden können.

Die Erfindung löst die gestellte Aufgabe durch die Merkmale des Anspruchs 1.

Sind an den Stirnseiten jeweils mindestens eine Aussparung und mindestens eine Lasche nebeneinander vorgesehen, kann dies unter anderem die Verbindung zwischen zwei Halteelementen durch in der Wirkungsweise unterschiedliche Verbindungselemente mechanisch stärken. Des Weiteren kann durch das Vorsehen von zwei unterschiedlichen Verbindungselementen nebeneinander auch die seitliche Genauigkeit der Verbindung verbessert werden, was eine exakte Ausrichtung der Halteelemente sicherstellt - dies auch dann, wenn Windbelastungen und/oder thermische Belastungen auf die Halteelemente wirken. Das erfindungsgemäße Halteelement kann daher Solarelemente standfest halten.

Zudem kann diese erfindungsgemäße Ausführung des Halteelements eine Fertigung als Blechtiefziehteil mit optimierter Materialnutzung gestatten, wodurch die Material - und Fertigungskosten erheblich reduziert werden können.

Im Allgemeinen wird erwähnt, dass die Aussparung als ausgespartes Loch bzw. damit lochförmig, beispielsweise auch langlochförmig, ausgebildet sein kann. Vorstellbar ist weiter, dass Aussparung und/oder die Lasche vom Metallblech ausgebildet werden.

Weisen die Stirnseiten je eine erste Halbseite und eine zweite Halbseite auf, wobei mindestens eine Aussparung an der ersten Halbseite und mindestens eine Lasche an der zweiten Halbseite angeordnet ist, ist die Lagefixierung der Halteelemente zueinander weiter verbesserbar. Die Funktionssicherheit des Halteelements kann sich folglich weiter erhöhen.

Vorzugsweise ist an der Stirnseite zu jeder Aussparung der einen Halbseite eine Lasche der anderen Halbseite mit gleichem Normalabstand zur Längsmittelachse des Halteelements angeordnet, um damit zwei erfindungsgemäße, in Ihrem Verlauf zueinander gegengleich ausgerichtete Halteelemente über deren selben Stirnseiten miteinander zu verbinden. Auch ist es so beispielsweise möglich, die Halteelemente auf einfache Weise fluchtend ausrichten zu können. Dieses Merkmal kann unter anderem die Verwindungssteifigkeit des Verbunds an Halteelementen und damit die Funktionssicherheit weiter erhöhen.

Vorzugsweise weist die Lasche Richtung Laschensteg einen, aufgebogenen Laschenanfang und ein, gegenüber dem Laschenanfang gegensinnig gebogenes Laschenende auf, wobei die Aussparung an einer Erhöhung im Halteelement vorgesehen ist, welche Erhöhung eine über die Aussparung zugängliche Aufnahme für ein Laschenende zu dessen Verhakung in der Aufnahme ausbildet. Durch diese Formgebung von Lasche und Aussparung können diese als zusammenwirkende Teile von Verbindungselementen den Effekt erfüllen, thermische Längsdehnung ohne Verspannung an der Verbindung aufzunehmen. Der Formschluss und eventuell auch ein Kraftschluss an der Verbindung ist sohin sichergestellt, womit erfindungsgemäß die Standfestigkeit weiter erhöht werden kann.

Das Laschenende kann mindestens ein, vorzugsweise zwei, seitlich wegstehende Lappen aufweisen, um die mechanische Verbindung zu verbessern.

Der konstruktive Aufbau des Halteelements kann weiter vereinfacht werden, wenn die Aussparungen schlitzförmig ausgebildet, insbesondere quer zur Längsmittelachse des Halteelements verlaufend, sind.

Vorzugsweise sind Aussparungen und Laschen auf einer Stirnseite alternierend nebeneinander auf einer Stirnseite vorgesehen. Somit ist es unter anderem möglich, ausgleichend auf Toleranzen der einzelnen Verbindungselemente zu wirken - was die Positionsgenauigkeit von verbundenen Halteelementen bzw. deren Ausrichtung zueinander weiter verbessern kann.

Für eine ausreichende Abstützung der zu tragenden Solarelement kann gesorgt werden, wenn die erste und zweite Auflage jeweils in einem Nahbereich einer Stirnseite des Halteelements vorgesehen sind.

Kompakte Abmessungen sind erreichbar, wenn das Halteelement an der zweiten Auflage endet, welche zweite Auflage die erste Auflage in ihrer Höhe überragt. Außerdem kann diese Formgebung die Stapelbarkeit des Halteelements verbessern und damit auch leichter transportiert werden.

Letztgenanntes ist weiter zu verbessern, wenn die Basis in Längsrichtung des Halteelements Aufstandsflächen vor der ersten Auflage sowie zwischen der ersten und zweiten Auflage ausbildet.

Vorzugsweise ist die Basis zwischen der ersten und zweiten Auflage zum Ballastieren des Halteelements ausgebildet, um damit die Halteelemente gegenüber Windkräften zu sichern.

Weist die Basis mehrere, vorzugsweise vorspringende, Längssicken auf, kann dies beispielsweise die Verwindungssteifigkeit des Halteelements weiter erhöhen.

Die Handhabungsfreundlichkeit des Halteelements bei der Befestigung von Solarelementen kann verbessert werden, wenn die erste und/oder zweite Auflage eine Positionierhilfe für das Solarelement und/oder eine Kabelfixierung aufweist.

Insbesondere eignet sich das Halteelement für eine einfach und standfest auszubildende Anordnung mit mehreren Halteelementen, wobei zumindest ein erstes und ein zweites Halteelement über die Verbindungselemente derselben Stirnseiten miteinander verbunden sind. Diese Anordnung der Halteelemente ist beispielsweise für eine Ost-West-Ausrichtung der Solarmodule besonders geeignet.

Außerdem kann sich eine Anordnung von mehreren erfindungsgemäßen Halteelementen nacheinander als vorteilhaft herausstellen, bei welchem zumindest zwei Halteelemente über ein Adapterelement miteinander verbunden sind, wobei hierfür das Adapterelement an seinen Stirnseiten Verbindungselemente, welche komplementär zu jenen der Stirnseiten der beiden Halteelemente ausgebildet sind, aufweist. Derart sind alle zuvor erwähnten Vorteile erreichbar. Die Anordnung von Halteelementen mit einem Adapterelement zwischen diesen Halteelementen, ist bei einer Süd-Ausrichtung der Solarmodule vorteilhaft.

Das Halteelement eignet sich insbesondere für eine Solaranlage, wenn ein Solarelement, insbesondere Solarmodule und/oder Solarkollektor, an den Auflagen des Halteelements aufliegt.

In den Figuren ist beispielsweise der Erfindungsgegenstand anhand einer Ausführungsvariante näher dargestellt. Es zeigen
- Fig. 1: eine dreidimensionale Ansicht auf ein Halteelement,
- Fig. 2: eine Draufsicht auf das Halteelement nach Fig. 1,
- Fig. 3: eine Anordnung von zwei Halteelementen und Solarelementen,
- Fig. 4: eine geschnittene Detailansicht der Verbindung zwischen zwei Halteelementen der Fig. 3,
- Fig. 4a und 4b: Detailansichten zu den nach Fig. 4 verbundenen komplementären Verbindungselementen,
- Fig. 5: eine weitere Anordnung von zwei Halteelementen, einem Adapterelement und Solarelementen und
- Fig. 6: eine dreidimensionale Ansicht zu einer Solaranlage mit mehreren Halteelementen und Solarelementen.

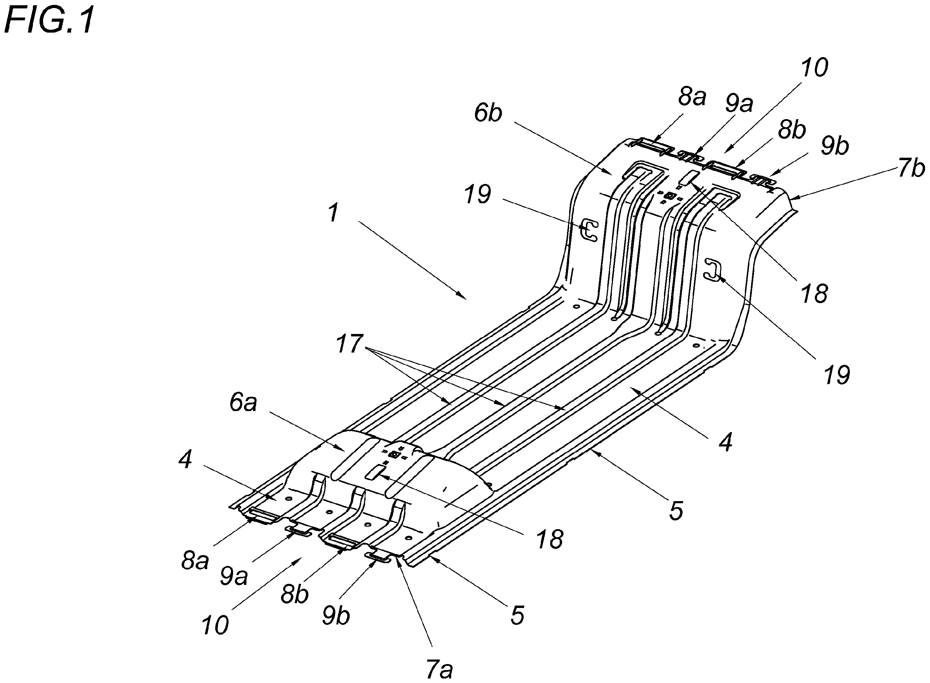

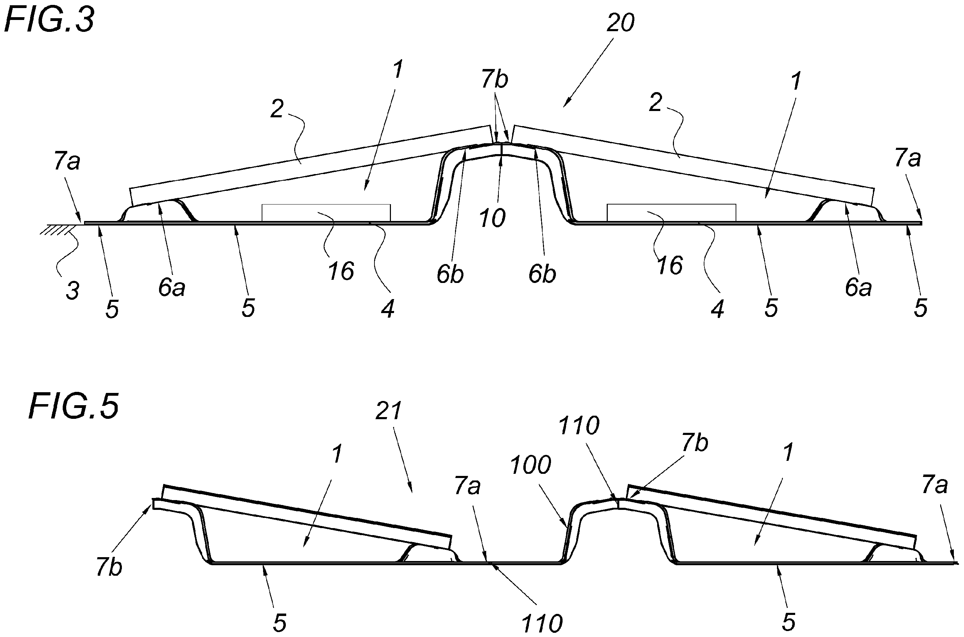

Nach Fig. 1 ist beispielsweise ein längliches Halteelement 1 dargestellt, das aus einem länglichen Metallblech bzw. Blechstreifen durch Blechumformen, insbesondere durch Tiefziehen, hergestellt ist. Damit kann die Produktion vergleichsweise kostengünstig erfolgen. Das Halteelement 1 wird verwendet, um mindestens ein Solarelement 2 beispielsweise an einem Gebäude 3 zu befestigen, was nach Fig. 3 schematisch dargestellt ist.

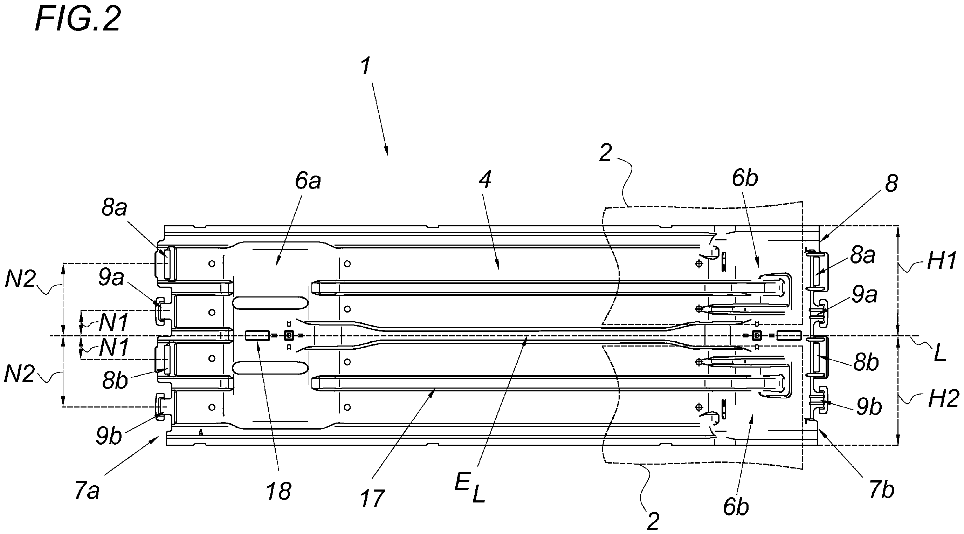

Hierzu weist das Halteelement 1 eine längliche Basis 4 auf, die eine ebene Aufstandsfläche 5 für das Halteelement 1 an dem Gebäude 3 ausbildet. Zudem weist das Halteelement 1 zwei Auflagen 6a, 6b für das Solarelement 2 auf, welche Auflagen 6a, 6b der Basis 4 auf derselben Basisseite vorspringen - und zwar bis auf unterschiedliche Höhen h1, h2 gegenüber der Basisseite, was anhand der vorzugsweise gemeinsamen Neigung der insbesondere ebenen Auflageflächen der Auflagen 6a, 6b den Neigungswinkel des Solarelements 2 gegenüber der Aufstandsfläche 5 bestimmt. An diesen Auflagen 6a, 6b können ein oder zwei Solarelemente 2 nebeneinander aufliegen, wie dies beispielsweise in Fig. 2 erkannt werden kann.

Zur mechanischen Verbindung des Halteelements 1 mit beispielsweise einem anderen Halteelement 1, wie in Fig. 3 dargestellt, weisen die Stirnseiten 7a, 7b der Halteelemente 1 mehrere Aussparungen 8a, 8b in Form von Langlöchern und mehrere Laschen 9a, 9b auf, welche Verbindungselemente 10 für ein formschlüssiges Zusammenwirken ausgeformt sind.

Die Aussparungen 8a, 8b und Laschen 9a, 9b schließen an das Metallblech einstückig an bzw. werden von diesem Metallblech ausgebildet, wie in Fig. 1 zu erkennen.

Erfindungsgemäß sind an jeder Stirnseite 7a, 7b zwei Aussparungen 8a, 8b und zwei Laschen 9a, 9b nebeneinander angeordnet, und zwar alternierend nebeneinander, wie dies in Fig. 1 beispielsweise erkannt werden kann. Damit sind auf jeder Stirnseite 7a und 7b zwei unterschiedlich mechanisch koppelbare Verbindungselemente 10 vorhanden, die gegenseitig spielausgleichend eine formgenaue und sichere Anschlussmöglichkeit am Halteelement 1 ausbilden können. Das Halteelement 1 eignet sich daher, Solarelemente 2 sicher zu halten - dies auch im Verbund mit anderen dazu gleich ausgebildeten Halteelementen 1.

Wie in Fig. 2 beispielsweise zu erkennen, sind auf jeder Stirnseite 7a, 7b zwei Aussparungen 8a, 8b sowie jeweils zwei Laschen 9a, 9b vorgesehen - und zwar je eine Aussparungen 8a bzw. 8b und je eine Lasche 9a bzw. 9b an einer Halbseite H1 bzw. H2 einer Stirnseite 7a bzw. 7b - wobei eine Längsmittelachse L des Halteelements 1 die beiden Stirnseiten 7a, 7b in ihre Halbseiten H1 bzw. H2 teilt.

Außerdem ist zu jeder Aussparung 8a bzw. 8b eine Lasche 9a bzw. 9b mit gleichem Normalabstand N1 bzw. N2 zur vertikalen Längsmittelebene E_{L} des Halteelements 1 angeordnet, wie dies an der Stirnseite 7a in Fig. 2 stellvertretend für beide Stirnseiten 7a und 7b gezeigt wird. Somit ist es möglich, zwei erfindungsgemäße, in Ihrem Verlauf zueinander gegengleich ausgerichtete Halteelemente 1 über deren selben Stirnseiten 7a bzw. 7b miteinander zu verbinden.

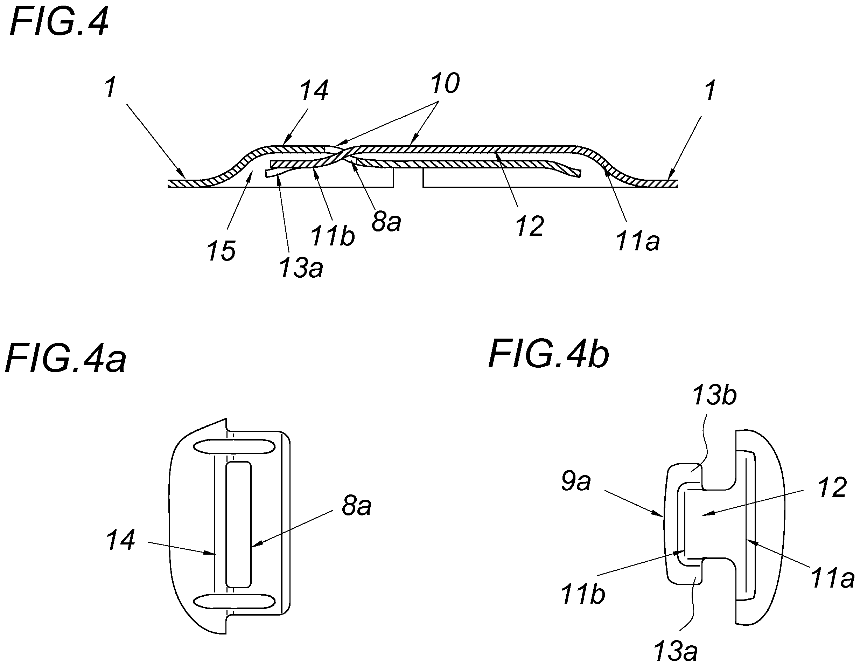

Nach Fig. 4 ist die Ausgestaltung einer Aussparung 8a und einer Lasche 9a in der Situation des Zusammenwirkens zu einer zumindest formschlüssigen Verbindung von zwei Halteelementen 1 näher dargestellt.

So weisen jede Lasche 9a, 9b Richtung Laschensteg 12 einen nach oben aufgebogenen Laschenanfang 11a und ein gegenüber dem aufgebogenen Laschenanfang 11a gegensinnig gebogenes Laschenende 11b auf. Zwischen dem aufgebogenen Laschenanfang 11a und dem Laschenende 11b befindet sich ein gerader, vorzugsweise zur Aufstandsfläche 5 paralleler, Laschensteg 12. Am Laschenende 11b sind zwei, seitlich wegstehende Lappen 13a, 13b vorgesehen.

Die Aussparung 8a ist an einer Erhöhung 14 vorgesehen, welche Erhöhung 14 zumindest einem daran anschließenden Bereich des Halteelements 1 vorspringt. Damit bildet die Erhöhung 14 eine über die Aussparung 8a zugängliche Aufnahme 15 für ein Laschenende 12 zu dessen Verhakung in der Aufnahme 15 aus. Hierzu ist die Aussparung 8a schlitzförmig ausgebildet und quer zur Längsmittelachse L des Halteelements 1 verlaufend, was einer einfachen Montage der Halteelemente 1 förderlich ist.

Die erste und zweite Auflage 6a, 6b sind jeweils in einem Nahbereich einer Stirnseite 7a, 7b des Halteelements 1 vorgesehen, wobei das Halteelement 1 an der zweiten Auflage 6b endet, die die erste Auflage 6a der Höhe nach - also in ihrem Abstand von der Basis 4 überragt. Dadurch kann beispielsweise materialsparend an ein weiteres Halteelement 1 direkt angeschlossen werden.

Hohe Standfestigkeit weist das Halteelement 1 dadurch auf, dass die Basis 4 in Längsrichtung des Halteelements 1 gesehen Aufstandsflächen 5 vor der ersten Auflage 6a und zwischen der ersten und zweiten Auflage 6a, 6b ausbildet. Die Aufstandsfläche 5 ist auch zum Ballastieren des Halteelements 1 mit einem Gewicht 16 ausgebildet. Trotz dieses Gewichts 16 bleibt das Halteelement 1 formstabil, wofür die Basis 4 mehrere, vorspringende und parallele Längssicken 17 aufweist.

Zudem weist das Halteelement 1 an der zweiten Auflage 6b eine Positionierhilfe 18 für das Solarelement 2 und eine Kabelfixierung 19 auf, was die Montage des Solarelement 2 erheblich erleichtert.

Hierzu ist die vorzugsweise mittig an der jeweiligen Auflage 6a, 6b vorgesehene Positionierhilfe 18 als dieser Auflage 6a, 6b vorspringender Anschlag für eine Seite des Solarelements 2 ausgebildet.

Wie in Fig. 3 zu erkennen, sind mehrere Halteelemente 1 nacheinander angeordnet und über deren Verbindungselemente 10 miteinander verbunden - wofür dieselben Stirnseiten 7b der beiden Halteelemente 1 (bzw. des ersten Halteelements 1 und des zweiten Halteelements 1) zueinander ausgerichtet werden. Damit kann ein zumindest formschlüssiger Verbund über die Verbindungselemente derselben Stirnseiten 7b, 7b hergestellt werden - bzw. sind Solarelemente 2 mit unterschiedlicher Ausrichtung zu befestigen. Dies ist beispielsweise für eine Ost-West-Ausrichtung der Solarelemente 2 besonders geeignet, damit eine Solaranlage 20 auszubilden.

Eine gleich verlaufende Ausrichtung der Solarelemente 2 wird ermöglicht, indem ein Adapterelement 100 zwischen der einen Stirnseite 7a des ersten Halteelements 1 und der anderen Stirnseite 7b des zweiten Halteelements 1 vorgesehen wird - siehe hierzu Fig. 5. Hierzu weist das Adapterelement komplementäre Verbindungselemente 110 auf, um die Halteelementen 1 an deren unterschiedlichen Stirnseiten 7a, 7b zu verbinden. Ist eine Süd-Ausrichtung der Solarelemente 2 gewünscht, wird vorzugsweise diese Anordnung gewählt, damit eine Solaranlage 21 auszubilden.

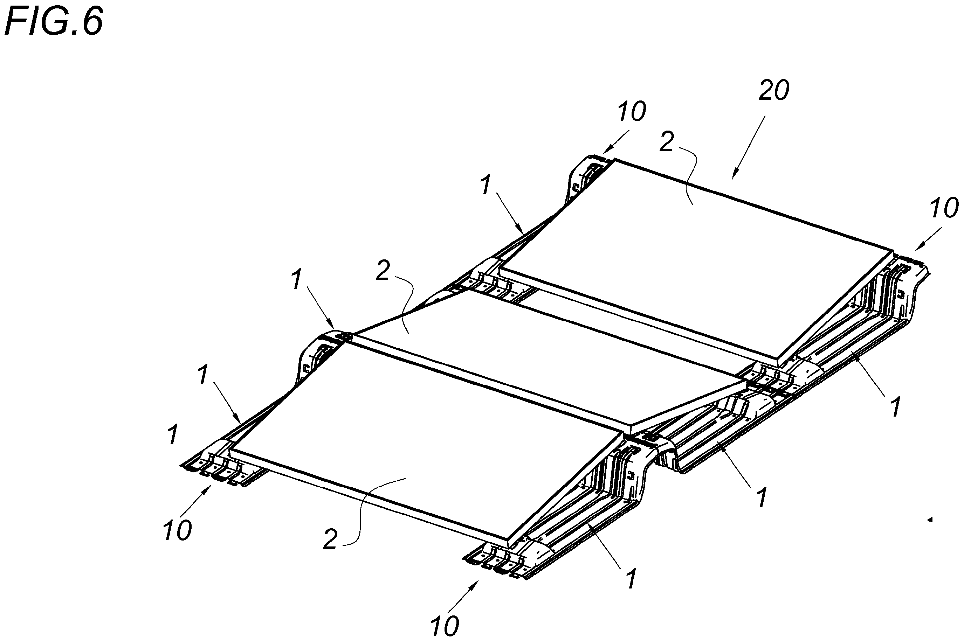

Bei beiden Solaranlagen 20, 21 liegt je ein Solarelement 2 auf zwei direkt nebeneinander vorgesehenen und parallel verlaufenden Halteelementen 1 auf deren Auflagen 6a, 6b auf, wie beispielsweise in Fig. 6 zur Solaranlage 20 dargestellt.

## Patentansprüche

1. Halteelement, insbesondere aus einem Metallblech, für mindestens ein Solarelement (2), insbesondere Solarmodul und/oder Solarkollektor, mit einer, eine Aufstandsfläche (5) für das Halteelement (1) ausbildenden Basis (4), mit zwei, von der Basis (4) unterschiedlich hoch vorspringenden Auflagen (6a, 6b) für das Solarelement (2) und mit an Stirnseiten (7a, 7b) des Halteelements (1) vorgesehenen Verbindungselementen (10), die mindestens eine, insbesondere lochförmige, Aussparung (8a, 8b) und wenigstens eine Lasche (9a, 9b) aufweisen, welche Lasche (9a, 9b) für ein Einbringen in solch eine Aussparung (8a, 8b) ausgeformt ist, **dadurch gekennzeichnet, dass** an den Stirnseiten (7a, 7b) jeweils mindestens eine Aussparung (8a, 8b) und mindestens eine Lasche (9a, 9b) nebeneinander vorgesehen sind.

2. Halteelement nach Anspruch 1, **dadurch gekennzeichnet, dass** die Stirnseiten (7a, 7b) je eine erste Halbseite (H1) und eine zweite Halbseite (H2) aufweisen, wobei mindestens eine Aussparung (8a, 8b) an der ersten Halbseite (H1) und mindestens eine Lasche (9a, 9b) an der zweiten Halbseite (H2) angeordnet sind.

3. Halteelement nach Anspruch 1 oder 2, **dadurch gekennzeichnet, dass** an der Stirnseite (7a, 7b) zu jeder Aussparung (8a, 8b) der einen Halbseite (H1, H2) eine Lasche (9a, 9b) der anderen Halbseite (H1, H2) mit gleichem Normalabstand (N1, N2) zur Längsmittelachse (L) des Halteelements (1) angeordnet ist.

4. Halteelement nach Anspruch 1, 2 oder 3, **dadurch gekennzeichnet, dass** die Lasche (9a, 9b) Richtung Laschensteg (12) einen, aufgebogenen Laschenanfang (11a) und ein, gegenüber dem Laschenanfang (11a) gegensinnig gebogenes Laschenende (11b) aufweist, und dass die Aussparung (8a, 8b) an einer Erhöhung (14) im Halteelement (1) vorgesehen ist, welche Erhöhung (14) eine über die Aussparung (8a, 8b) zugängliche Aufnahme (15) für ein Laschenende (11b) zu dessen Verhakung in der Aufnahme (15) ausbildet.

5. Halteelement nach Anspruch 4, **dadurch gekennzeichnet, dass** das Laschenende (11b) mindestens einen, vorzugsweise zwei, seitlich wegstehende Lappen (13a, 13b) aufweist.

6. Halteelement nach einem der Ansprüche 1 bis 5, **dadurch gekennzeichnet, dass** die Aussparungen (8a, 8b) schlitzförmig, insbesondere quer zur Längsmittelachse (L) des Halteelements (1) verlaufend, ausgebildet sind.

7. Halteelement nach einem der Ansprüche 1 bis 6, **dadurch gekennzeichnet, dass** Aussparungen (8a, 8b) und Laschen (9a, 9b) auf einer Stirnseite (7a, 7b) alternierend nebeneinander vorgesehen sind.

8. Halteelement nach einem der Ansprüche 1 bis 7, **dadurch gekennzeichnet, dass** die erste und zweite Auflage (6a, 6b) jeweils in einem Nahbereich einer Stirnseite (7a, 7b) des Halteelements (1) vorgesehen sind.

9. Halteelement nach einem der Ansprüche 1 bis 8, **dadurch gekennzeichnet, dass** das Halteelement (1) an der zweiten Auflage (6b) endet, welche zweite Auflage (6b) die erste Auflage (6a) in ihrer Höhe überragt.

10. Halteelement nach einem der Ansprüche 1 bis 9, **dadurch gekennzeichnet, dass** die Basis (4) in Längsrichtung des Halteelements (1) Aufstandsflächen (5) vor der ersten Auflage (6a) sowie zwischen der ersten und zweiten Auflage (6b) ausbildet.

11. Halteelement nach einem der Ansprüche 1 bis 10, **dadurch gekennzeichnet, dass** die Basis (4) zwischen der ersten und zweiten Auflage (6a, 6b) zur Ballastierung des Halteelements (1) ausgebildet ist.

12. Halteelement nach einem der Ansprüche 1 bis 11, **dadurch gekennzeichnet, dass** die Basis (4) mehrere, vorzugsweise vorspringende, Längssicken (17) aufweist.

13. Halteelement nach einem der Ansprüche 1 bis 12, **dadurch gekennzeichnet, dass** die erster und/oder zweite Auflage (6b) eine Positionierhilfe (18) für das Solarelement (2) und/oder eine Kabelfixierung (19) aufweist.

14. Anordnung mit mehreren Halteelementen (1) nach einem der Ansprüche 1 bis 13, wobei zumindest ein erstes und ein zweites Halteelement (1) über die Verbindungselemente (10) derselben Stirnseiten (7b) miteinander verbunden sind.

15. Anordnung von mehreren Halteelementen (1) nach einem der Ansprüche 1 bis 13, wobei zumindest zwei Halteelemente (1) über ein Adapterelement (100) miteinander verbunden sind, wobei hierfür das Adapterelement (100) an seinen Stirnseiten Verbindungselemente (110), welche komplementär zu jenen der Stirnseiten (7a, 7b) der beiden Halteelemente (1) ausgebildet sind, aufweist.

16. Anordnung mit mindestens zwei Halteelementen (1) nach einem der Ansprüche 1 bis 13, und mit mindestens einem Solarelement (2), insbesondere Solarmodule und/oder Solarkollektor, wobei das Solarelement (2) an den Auflagen (6a, 6b) der beiden, direkt nebeneinander vorgesehenen Halteelementen (1) aufliegt.

17. Solaranlage mit einer Anordnung nach einem der Ansprüche 14 bis 16.

## Claims

1. Retaining element, more particularly made of a metal sheet, for at least one solar element (2), more particularly solar module and/or solar collector, having a base (4) forming a contact surface (5) for the retaining element (1), having two supports (6a, 6b) for the solar element (2) projecting from the base (4) to different heights and having connecting elements (10) provided on end faces (7a, 7b) of the retaining element (1), which have at least one, more particularly hole-shaped, recess (8a, 8b) and at least one lug (9a, 9b), which lug (9a, 9b) is shaped for insertion into such a recess (8a, 8b), **characterized in that** at least one recess (8a, 8b) and at least one lug (9a, 9b) are provided in each case next to one another on the end faces (7a, 7b).

2. Retaining element according to claim 1, **characterized in that** the end faces (7a, 7b) each have a first half side (H1) and a second half side (H2), wherein at least one recess (8a, 8b) is arranged on the first half side (H1) and at least one lug (9a, 9b) is arranged on the second half side (H2).

3. Retaining element according to claim 1 or 2, **characterized in that** a lug (9a, 9b) of the other half side (H1, H2) is arranged at the end face (7a, 7b) to each recess (8a, 8b) of the one half side (H1, H2) with the same normal distance (N1, N2) to the longitudinal central axis (L) of the retaining element (1).

4. Retaining element according to claim 1, 2 or 3, **characterized in that** the lug (9a, 9b) has, in the direction of the lug web (12), a bent-up lug start (11a) and a lug end (11b) bent in the opposite direction to the lug start (11a), and **in that** the recess (8a, 8b) is provided on an elevation (14) in the retaining element (1), which elevation (14) forms a receptacle (15), accessible via the recess (8a, 8b), for a lug end (11b) for hooking it in the receptacle (15).

5. Retaining element according to claim 4, **characterized in that** the lug end (11b) has at least one, preferably two, laterally projecting tabs (13a, 13b).

6. Retaining element according to one of claims 1 to 5, **characterized in that** the recesses (8a, 8b) are of slot-shaped design, more particularly extending transversely to the longitudinal central axis (L) of the retaining element (1).

7. Retaining element according to one of claims 1 to 6, **characterized in that** recesses (8a, 8b) and lugs (9a, 9b) are provided alternately next to one another on one end face (7a, 7b).

8. Retaining element according to one of claims 1 to 7, **characterized in that** the first and second supports (6a, 6b) are each provided in a near region of an end face (7a, 7b) of the retaining element (1).

9. Retaining element according to one of claims 1 to 8, **characterized in that** the retaining element (1) ends at the second support (6b), which second support (6b) projects above the first support (6a) in height.

10. Retaining element according to one of claims 1 to 9, **characterized in that** the base (4) forms contact surfaces (5) in front of the first support (6a) and between the first and second supports (6b) in the longitudinal direction of the retaining element (1).

11. Retaining element according to one of claims 1 to 10, **characterized in that** the base (4) is formed between the first and second supports (6a, 6b) for ballasting the retaining element (1).

12. Retaining element according to one of claims 1 to 11, **characterized in that** the base (4) has a plurality of, preferably projecting, longitudinal beads (17).

13. Retaining element according to one of claims 1 to 12, **characterized in that** the first and/or second support (6b) has a positioning aid (18) for the solar element (2) and/or a cable fixing (19).

14. Arrangement having several retaining elements (1) according to one of claims 1 to 13, wherein at least a first and a second retaining element (1) are connected to each other via the connecting elements (10) of the same end faces (7b).

15. Arrangement of a plurality of retaining elements (1) according to one of claims 1 to 13, wherein at least two retaining elements (1) are connected to one another via an adapter element (100), wherein for this purpose the adapter element (100) has on its end faces connecting elements (110) which are formed complementarily to those of the end faces (7a, 7b) of the two retaining elements (1).

16. Arrangement having at least two retaining elements (1) according to one of claims 1 to 13, and having at least one solar element (2), more particularly solar modules and/or solar collector, wherein the solar element (2) rests on the supports (6a, 6b) of the two retaining elements (1) provided directly next to one another.

17. Solar installation having an arrangement according to one of claims 14 to 16.

## Revendications

1. Élément de retenue, en particulier en tôle métallique, pour au moins un élément solaire (2), en particulier un module solaire et/ou un collecteur solaire, avec une base (4) formant une surface de pose (5) pour l'élément de retenue (1), avec deux supports (6a, 6b) pour l'élément solaire (2), faisant saillie de la base (4) à des hauteurs différentes, et avec des éléments de liaison (10) prévus sur des faces frontales (7a, 7b) de l'élément de retenue (1), qui présentent au moins un évidement (8a, 8b), en particulier en forme de trou, et au moins une patte (9a, 9b), laquelle patte (9a, 9b) est formée pour être introduite dans un tel évidement (8a, 8b), **caractérisé en ce qu'**au moins un évidement (8a, 8b) et au moins une patte (9a, 9b) sont prévus l'un à côté de l'autre sur chacune des faces frontales (7a, 7b) .

2. Élément de retenue selon la revendication 1, **caractérisé en ce que** les faces frontales (7a, 7b) présentent chacune une première demi-face (H1) et une deuxième demi-face (H2), au moins un évidement (8a, 8b) étant disposé sur la première demi-face (H1) et au moins une patte (9a, 9b) étant disposée sur la deuxième demi-face (H2).

3. Élément de retenue selon la revendication 1 ou 2, **caractérisé en ce que** sur la face frontale (7a, 7b), pour chaque évidement (8a, 8b) d'une demi-face (H1, H2), une patte (9a, 9b) de l'autre demi-face (H1, H2) est disposée à la même distance normale (N1, N2) par rapport à l'axe médian longitudinal (L) de l'élément de retenue (1).

4. Élément de retenue selon la revendication 1, 2 ou 3, **caractérisé en ce que** la patte (9a, 9b) présente, dans la direction de l'âme de patte (12), un début de patte recourbé (11a) et une extrémité de patte (11b) courbée en sens inverse par rapport au début de patte (11a), et **en ce que** l'évidement (8a, 8b) est prévu sur une élévation (14) dans l'élément de retenue (1), laquelle élévation (14) forme un logement (15) accessible via l'évidement (8a, 8b) pour une extrémité de patte (11b) en vue de son accrochage dans le logement (15).

5. Élément de retenue selon la revendication 4, **caractérisé en ce que** l'extrémité de patte (11b) présente au moins une, de préférence deux languettes (13a, 13b) faisant saillie latéralement.

6. Élément de retenue selon l'une des revendications 1 à 5, **caractérisé en ce que** les évidements (8a, 8b) sont réalisés en forme de fente, en particulier s'étendant transversalement à l'axe médian longitudinal (L) de l'élément de retenue (1).

7. Élément de retenue selon l'une des revendications 1 à 6, **caractérisé en ce que** des évidements (8a, 8b) et des pattes (9a, 9b) sont prévus de manière alternée les uns à côté des autres sur une face frontale (7a, 7b).

8. Élément de retenue selon l'une des revendications 1 à 7, **caractérisé en ce que** le premier et le deuxième support (6a, 6b) sont prévus chacun dans une zone proche d'une face frontale (7a, 7b) de l'élément de retenue (1).

9. Élément de retenue selon l'une des revendications 1 à 8, **caractérisé en ce que** l'élément de retenue (1) se termine au niveau du deuxième support (6b), lequel deuxième support (6b) dépasse en hauteur le premier support (6a).

10. Élément de retenue selon l'une des revendications 1 à 9, **caractérisé en ce que** la base (4) forme des surfaces de pose (5) en amont du premier support (6a) ainsi qu'entre le premier et le deuxième support (6b) dans la direction longitudinale de l'élément de retenue (1).

11. Élément de retenue selon l'une des revendications 1 à 10, **caractérisé en ce que** la base (4) est réalisée entre le premier et le deuxième support (6a, 6b) pour lester l'élément de retenue (1).

12. Élément de retenue selon l'une des revendications 1 à 11, **caractérisé en ce que** la base (4) présente plusieurs nervures longitudinales (17), de préférence en saillie.

13. Élément de retenue selon l'une des revendications 1 à 12, **caractérisé en ce que** le premier et/ou le deuxième support (6b) présente une aide au positionnement (18) pour l'élément solaire (2) et/ou une fixation de câble (19).

14. Agencement comportant plusieurs éléments de retenue (1) selon l'une des revendications 1 à 13, dans lequel au moins un premier et un deuxième élément de retenue (1) sont reliés entre eux par les éléments de liaison (10) des mêmes faces frontales (7b).

15. Agencement de plusieurs éléments de retenue (1) selon l'une des revendications 1 à 13, dans lequel au moins deux éléments de retenue (1) sont reliés entre eux par un élément adaptateur (100), l'élément adaptateur (100) présentant à cet effet sur ses faces frontales des éléments de liaison (110) qui sont réalisés de manière complémentaire à ceux des faces frontales (7a, 7b) des deux éléments de retenue (1).

16. Agencement comportant au moins deux éléments de retenue (1) selon l'une des revendications 1 à 13, et au moins un élément solaire (2), en particulier des modules solaires et/ou un collecteur solaire, l'élément solaire (2) reposant sur les supports (6a, 6b) des deux éléments de retenue (1) prévus directement l'un à côté de l'autre.

17. Installation solaire comportant un agencement selon l'une des revendications 14 à 16.
